# EUROPEAN PATENT APPLICATION

(11) **EP 2 727 639 A1**
(43) Date of publication of application: **07.05.2014**
(21) Application number: 12191042.6
(22) Date of filing: 02.11.2012
(51) Int. Cl.: B01D 29/54, B01D 29/66, B01D 29/68

(54) **Reverse rinsing filter**

(71) Applicant: Honeywell Technologies Sarl, 1180 Rolle (CH)
(72) Inventor: Haltmar, Bretislav, 664 57 Menin (CZ)
(74) Representative: Sturm, Christoph

(57) **Abstract**

Reverse rinsing filter (10), having a housing (11), the housing (11) provides an inlet chamber (12) for liquid medium, especially for potable water, to be filtered and an outlet chamber (13) for filtered liquid medium, wherein the inlet chamber (12) and the outlet chamber (13) are separated by a sieve insert (18) in such a way that in a filtration mode of the reverse rinsing filter (10) liquid medium flows from the inlet chamber (12) through the sieve insert (18) into the outlet chamber (13) and that in a reverse rinsing mode of the reverse rinsing filter (10) liquid medium flows from the outlet chamber (13) through the sieve insert (18) into the inlet chamber (12). The inlet chamber (12) comprises a first inlet sub-chamber (12a) and a second inlet sub-chamber (12b). The sieve insert (18) comprises a first sieve (18a) and a second sieve (18b), wherein the first sieve (18a) separates the first inlet sub-chamber (12a) from the outlet chamber (13) and the second sieve (18b) separates the second inlet sub-chamber (12b) from the outlet chamber (13) in such a way that in the filtration mode of the reverse rinsing filter (10) liquid medium flows from the first inlet chamber (12a) through the first sieve (18a) and from the second inlet chamber (12b) through the second sieve (18b) into the outlet chamber (13), that in a first reverse rinsing mode of the reverse rinsing filter (10) liquid medium flows from the first inlet chamber (12a) through the first sieve (18a) into the outlet chamber (13) and from the outlet chamber (13) through the second sieve (18b) into the second inlet chamber (12b), and that in a second reverse rinsing mode of the reverse rinsing filter (10) liquid medium flows from the second inlet chamber (12b) through the second sieve (18b) into the outlet chamber (13) and from the outlet chamber (13) through the first sieve (18a) into the first inlet chamber (12b).

## Description

The present patent application relates to a reverse rinsing filter.

A reverse rinsing filter according to the prior art is known from the product leaflet "F76S-F, Reverse rinsing fine filter with flanges, Honeywell GmbH, year 2008". The reverse rinsing filter disclosed in this product leaflet comprises a housing. The housing provides an inlet opening being in communication with an inlet chamber for liquid medium, especially for potable water, to be filtered and an outlet opening being in communication with an outlet chamber for filtered liquid medium. The inlet chamber and the outlet chamber are separated by a sieve insert in such a way that in a filtration mode of the reverse rinsing filter liquid medium flows from the inlet chamber through the sieve insert into the outlet chamber and that in a reverse rinsing mode of the reverse rinsing filter liquid medium flows from the outlet chamber through the sieve insert into the inlet chamber. The reverse rinsing mode is also often called backwashing mode. A shut-off valve is assigned to the inlet chamber, wherein the shut-off valve is closed in the filtration mode of the reverse rinsing filter and wherein the shut-off valve is opened in the reverse rinsing mode of the reverse rinsing filter.

During the filtration mode of the reverse rinsing filter known from the prior art, the reverse rinsing filter provides a flow rate of filtered liquid medium at the outlet opening of the housing. During the reverse rinsing mode of the reverse rinsing filter known from the prior art, the reverse rinsing filter can not provide a flow rate of filtered liquid medium at the outlet opening of the housing.

Against this background, a novel reverse rinsing filter is provided. The reverse rinsing filter is defined in the claim 1. According to present application, the inlet chamber of the reverse rinsing filter comprises a first inlet sub-chamber and a second inlet sub-chamber. In addition, the sieve insert of the reverse rinsing filter comprises a first sieve and a second sieve, wherein the first sieve separates the first inlet sub-chamber from the outlet chamber and the second sieve separates the second inlet sub-chamber from the outlet chamber.

In the filtration mode of the reverse rinsing filter liquid medium flows from the first inlet chamber through the first sieve into the outlet chamber and from the second inlet chamber through the second sieve into the outlet chamber.

In a first reverse rinsing mode of the reverse rinsing filter liquid medium flows from the first inlet chamber through the first sieve into the outlet chamber and from the outlet chamber through the second sieve into the second inlet chamber. In the first reverse rinsing mode the second sieve becomes backwashed and the first sieve provides filtered liquid medium.

In a second reverse rinsing mode of the reverse rinsing filter liquid medium flows from the second inlet chamber through the second sieve into the outlet chamber and from the outlet chamber through the first sieve into the first inlet chamber. In the second reverse rinsing mode the first sieve becomes backwashed and the second sieve provides filtered liquid medium.

The reverse rinsing filter of to the present application comprises two inlet sub-chambers being in communication with the common outlet chamber. The two inlet sub-chambers provide during the filtration mode of the reverse rinsing filter a parallel flow of the liquid medium from the inlet opening to the outlet chamber and thereby to the outlet opening of the reverse rinsing filter. Both sieves of the sieve insert are used for filtration during the filtration mode.

During the first reverse rinsing mode as well as during the second reverse rinsing mode it is possible to provide a certain flow rate of filtered liquid medium at the outlet opening of the housing. During both reverse rinsing modes, only one of the two sieves of the sieve insert is used for the filtration while the other sieve of the sieve insert becomes backwashed.

According to a preferred embodiment, a first inlet valve is connected between an inlet opening of the housing and the first inlet sub-chamber and a second inlet valve is connected between the inlet opening of the housing and the second inlet sub-chamber, wherein in the filtration mode of the reverse rinsing filter both inlet valves are opened, wherein in the first reverse rinsing mode of the reverse rinsing filter the first inlet valve is opened and the second inlet valve is closed, and wherein in the second reverse rinsing mode of the reverse rinsing filter the second inlet valve is opened and the first inlet valve is closed. Preferably, a first shut-off valve is assigned to the first inlet sub-chamber and a second shut-off valve is assigned to the second inlet sub-chamber, wherein in the filtration mode of the reverse rinsing filter both shut-off valves are closed, wherein in the first reverse rinsing mode of the reverse rinsing filter the first shut-off valve is closed and the second shut-off valve is opened, and wherein in the second reverse rinsing mode of the reverse rinsing filter the second shut-off valve is closed and the first shut-off valve is opened. This design is simple and provides a reliable operation of the reverse rinsing filter in the filtration mode and in both reverse rinsing modes of the same.

According to a preferred embodiment, the sieve insert comprises further an impeller being positioned within the outlet chamber between the first sieve and the second sieve, whereby the impeller stands still in the filtration mode of the reverse rinsing filter, and wherein the impeller rotates in first and second reverse rinsing mode of the reverse rinsing filter. The impeller further improves the backwashing of the sieves of the sieve insert during both reverse rinsing modes of the reverse rinsing filter.

Preferred developments of the invention are provided by the dependent claims and the description which follows. Exemplary embodiments are explained in more detail on the basis of the drawing, in which:
Figure 1 shows a cross section through a reverse rinsing filter according to the present application in a filtration mode of the reverse rinsing filter;
Figure 2 shows another cross section of the reverse rinsing filter along the intersecting line l-l in Fig. 1 in a first reverse rinsing mode of the reverse rinsing filter; and
Figure 3 shows another cross section of the reverse rinsing filter along the intersecting line l-l in Fig. 1 in a second reverse rinsing mode of the reverse rinsing filter.

The present application relates to a reverse rinsing filter 10. Such a reverse rinsing filter 10 comprises a housing 11, wherein the housing 11 provides an inlet chamber 12 for liquid medium to be filtered and an outlet chamber 13 for filtered liquid medium. The housing 11 comprises an upper connection section 11a and a lower filter-bowl section 11b.

The reverse rinsing filter 10 according to the present application is preferably used for the filtration of potable water.

The inlet chamber 12 of the housing 11 of the reverse rinsing filter 10 is in communication with an inlet opening 14 of the housing 11 and the outlet chamber 13 of the housing 11 of the reverse rinsing filter 10 is in communication with an outlet opening 15 of the housing 11. The inlet opening 14 is provided in the region of an inlet flange 16 and the outlet opening 15 is provided in the region of an outlet flange 17 of the connection section 11 a of the housing 11. The reverse rinsing filter 10 is connectable to an inlet pipe through said inlet flange 16 and to an outlet pipe through said inlet flange 17.

The reverse rinsing filter 10 comprises a sieve insert 18 being positioned within the filter-bowl section 11 b of the housing 11. The sieve insert 18 separates the inlet chamber 12 from the outlet chamber 13 in such a way that in a filtration mode of the reverse rinsing filter 10 liquid medium flows from the inlet chamber 12 through the sieve insert 18 into the outlet chamber 13 and that in a reverse rinsing mode of the reverse rinsing filter 10 liquid medium flows from the outlet chamber 13 through the sieve insert 18 into the inlet chamber 12.

The inlet chamber 12 comprises a first inlet sub-chamber 12a and a second inlet sub-chamber 12b. The sieve insert 18 comprises a first sieve 18a and a second sieve 18b. The first sieve 18a separates the first inlet sub-chamber 12a from the outlet chamber 13. The second sieve 18b separates the second inlet sub-chamber 12b from the outlet chamber 13. The first inlet sub-chamber 12a provides a radial outer sub-chamber of the inlet chamber 12 and the second inlet sub-chamber 12b provides a radial inner sub-chamber of the inlet chamber 12. The outlet chamber 13 is in radial directed of the housing 11 positioned between the first inlet sub-chamber 12a and the second inlet sub-chamber 12b.

A first inlet valve 19a is connected between the inlet opening 14 of the housing 11 and the first inlet sub-chamber 12a. A second inlet valve 19b is connected between the inlet opening 14 of the housing 11 and the second inlet sub-chamber 12b. Upstream of the two inlet valves 19a, 19b and thereby upstream of the two first inlet sub-chambers 12a, 12b the inlet chamber 12 provides a common inlet sub-chamber 12c.

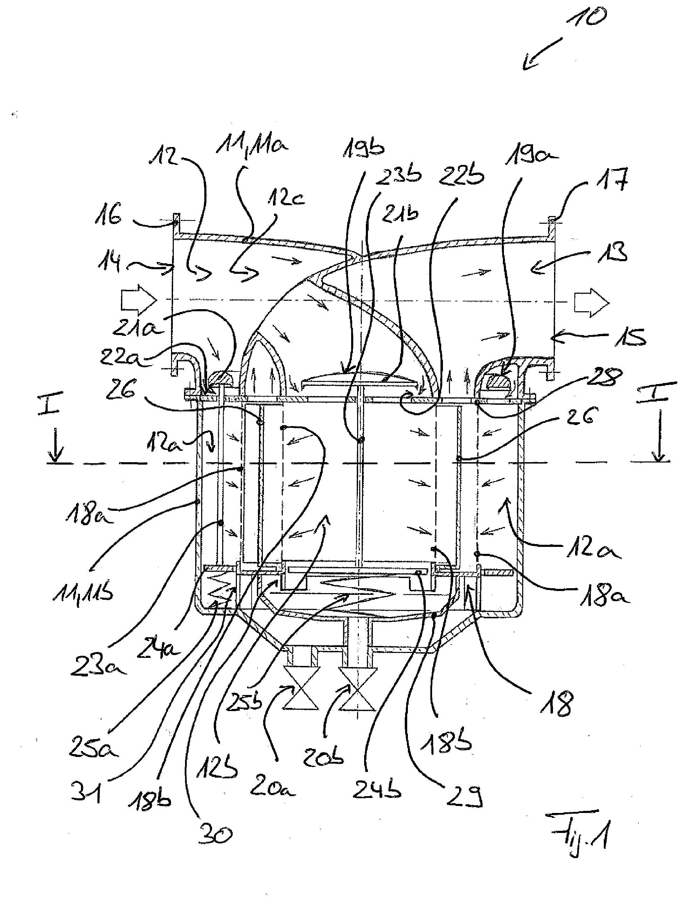

The first sieve 18a separates the first inlet sub-chamber 12a from the outlet chamber 13 and the second sieve 18b separates the second inlet sub-chamber 12b from the outlet chamber 13 in such a way that in the filtration mode of the reverse rinsing filter 10 (see Figure 1) liquid medium flows from the first inlet chamber 12a through the first sieve 18a into the outlet chamber 13 and in parallel from the second inlet chamber 12b through the second sieve 18b into the outlet chamber 13.

Both sieves 18a, 18b provide filtered liquid medium at the outlet opening 15 when the reverse rinsing filter 10 is operates in the filtration mode.

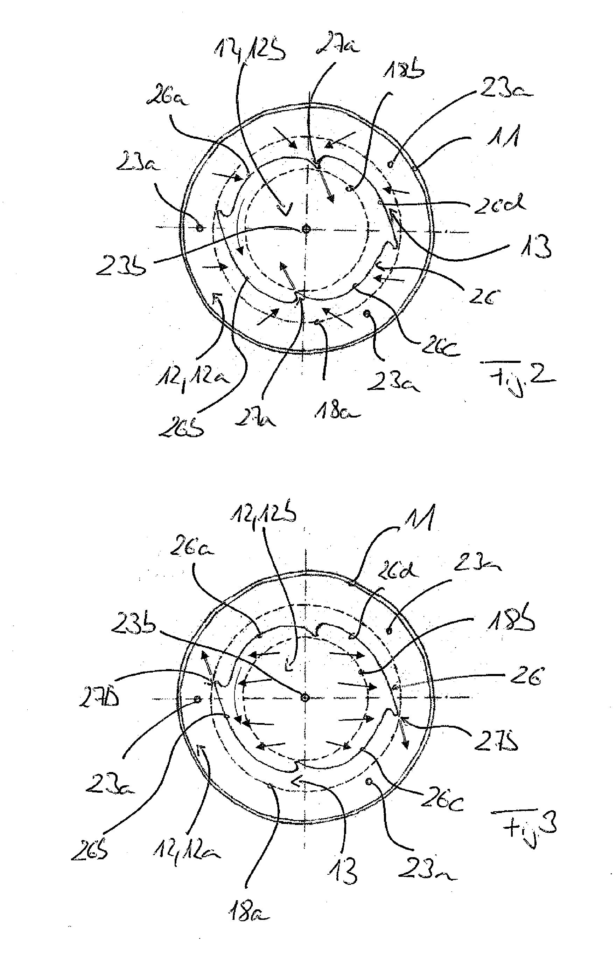

In a first reverse rinsing mode of the reverse rinsing filter 10 (see Figure 2) liquid medium flows from the first inlet chamber 12a through the first sieve 18a into the outlet chamber 13 thereby providing filtered liquid medium at the outlet opening 15. In addition, for backwashing of the second sieve 18b during the first reverse rinsing mode liquid medium flows from the outlet chamber 13 through the second sieve 18b into the second inlet chamber 12b.

In a second reverse rinsing mode of the reverse rinsing filter 10 (see Figure 3) liquid medium flows from the second inlet chamber 12b through the second sieve 18b into the outlet chamber 13 thereby providing filtered liquid medium at the outlet opening 15. in addition, for backwashing of the first sieve 18a during the second reverse rinsing mode liquid medium flows from the outlet chamber 13 through the first sieve 18a into the first inlet chamber 12a.

The two inlet sub-chambers 12a, 12b provide in the filtration mode (see Figure 1) of the reverse rinsing filter 10 a parallel flow of the liquid medium from the inlet opening 14 to the outlet chamber 13 and thereby to the outlet opening 15 of the reverse rinsing filter 10. Both sieves 18a, 18b of the sieve insert 18 are used for filtration during the filtration mode.

In the first reverse rinsing mode (see Figure 2) as well as during the second reverse rinsing mode (see Figure 3) it is possible to provide a certain flow rate of filtered liquid medium at the outlet opening 15 of the housing 11.

During both reverse rinsing modes, only one of the two sieves 18a or 18b of the sieve insert 18 is used for filtration while the other sieve 18b or 18a of the sieve insert 18 becomes backwashed.

In the filtration mode (see Figure 1) of the reverse rinsing filter 10 both inlet valves 19a, 19b are opened. In the first reverse rinsing mode (see Figure 2) of the reverse rinsing filter 10 the first inlet valve 19a is opened and the second inlet valve 19b is closed. In the second reverse rinsing mode (see Figure 3) of the reverse rinsing filter 10 the second inlet valve 19b is opened and the first inlet valve 19a is closed.

The two inlet valves 19a and 19b act together with two shut-off valves 20a and 20b. A first shut-off valve 20a is assigned to the first inlet sub-chamber 12a and a second shut-off valve 20b is assigned to the second inlet sub-chamber 12b. In the filtration mode (see Figure 1) of the reverse rinsing filter 10 both shut-off valves 20a, 20b are closed. In the first reverse rinsing mode (see Figure 2) of the reverse rinsing filter 10 the first shut-off valve 20a is closed and the second shut-off valve 20b is opened. In the second reverse rinsing mode (see Figure 3) of the reverse rinsing filter 10 the second shut-off valve 20b is closed and the first shut-off valve 20a is opened.

When the first shut-off valve 20a is opened, the first inlet sub-chamber 12a is drainable to the ambient. When the second shut-off valve 20b is opened, the second inlet sub-chamber 12b is drainable to the ambient.

During operation of the reverse rinsing filter 10 the first inlet valve 19a is automatically opened when the first shut-off valve 20a is closed. Further on, during operation of the reverse rinsing filter 10 the first inlet valve 19a is automatically closed when the first shut-off valve 20a is opened.

In addition, the second inlet valve 19b is automatically opened when the second shut-off valve 20b is closed during operation of the reverse rinsing filter 10. Further on, the second inlet valve 19b is automatically closed when the second shut-off valve 20b is opened during operation of the reverse rinsing filter 10.

As shown in Figure 1, each inlet valve 19a, 19b comprises a valve plunger 21 a, 21 b acting together with a valve seat 22a, 22b.

Each valve plunger 21 a, 21 b is assigned to a first end of a valve stem 23a, 23b of the respective inlet valve 19a, 19b, whereby an opposite second end of the valve stem 23a, 23b of the respective inlet valve 19a, 19b is assigned to a plate like element 24a, 24b of the respective inlet valve 19a, 19b. The valve stem 23a of the first inlet valve 19a comprises three valve stem sections 23a (see Figures 2 and 3).

The valve seats 22a, 22b are provided by a disc-like element 28. The disc-like element 28 is pressed between the upper section 11 a of the housing 11 and the filter bowl section 11 b of the housing 11. The disc-like element 28 further provides guidance for the valve steams 23a, 23b.

A bottom part 29 separates backwashed water of the first reverse rinsing mode from backwashed water of the second reverse rinsing. The bottom part 29 guides the plate like elements 24.

During the first reverse rinsing mode backwashed water flows from the second inlet chamber 12b through openings 30 in the bottom part 29 to the second shut-off valve 20b. During the second reverse rinsing mode backwashed water flows from the first inlet chamber 12a through other openings 31 in the bottom part 29 to the first shut-off valve 20a.

Each inlet valve 19a, 19b comprises further a spring element 25a, 25b acting on the plate like element 24a, 24b of the respective inlet valve 19a, 19b. The spring element 25a acting on the plate like element 24a of the first inlet valve 19a comprises three spring element sections 25a each acting on the plate like element 24a immediately below the three valve stem sections 23a of the valve stem 23a of the first inlet valve 19a.

When the first shut-off valve 20a is closed, a force provided by the pressure of the liquid medium below the bottom side of the plate like element 24a and the spring force provided by the spring element 25a lift up the valve plunger 21 a from the valve seat 22a thereby opening the first inlet valve 19a.

However, when the first shut-off valve 20a is opened, the pressure below the bottom side of the plate like element 24a is reduced to the ambient pressure and the spring force provided by the spring element 25a is too small to lift up the valve plunger 21 a from the valve seat 22a so that the first inlet valve 19a closes automatically.

When the second shut-off valve 20b is closed, a force provided by the pressure of the liquid medium below the bottom side of the plate like element 24b and the spring force provided by the spring element 24b lift up the valve plunger 21 b from the valve seat 22b thereby opening the second inlet valve 19b.

However, when the second shut-off valve 20b is opened, the pressure below the bottom side of the plate like element 24b is reduced to the ambient pressure and the spring force provided by the spring element 25b is too small to lift up the valve plunger 21 b from the valve seat 22b so that the second inlet valve 19b closes automatically.

In the shown embodiment, the first shut-off valve 20a and the second shut-off valve 20b are both provided by an individual two-way-valve.

Preferably, the first shut-off valve 20a and the second shut-off valve 20b are both provided by a common three-way-valve.

The sieve insert 18 comprises further an impeller 26. The impeller 26 is positioned within the outlet chamber 13 in radial direction of the housing 11 between the first sieve 18a and the second sieve 18b.

The impeller 26 stands still in the filtration mode (see Figure 1) of the reverse rinsing filter 10. The impeller 26 rotates in first reverse rinsing mode (see Figure 2) and second reverse rinsing mode (see Figure 3) of the reverse rinsing filter 10.

In the shown embodiment, the impeller 26 comprises four impeller sections 26a, 26b, 26c, 26d positioned side-by-side in circumferential direction. Between each two adjacent impeller sections 26a and 26b, 26b and 26c, 26c and 26d and 26d and 26a the impeller 26 provides impeller nozzles 27a and 27b, namely two first impeller nozzles 27a being active in first reverse rinsing mode (see Figure 2) of the reverse rinsing filter 10 and at two second impeller nozzles 27b being active in the second reverse rinsing mode (see Figure 3) of the reverse rinsing filter 10. During each reverse rinsing mode the impeller 26 rotates and the liquid medium flowing through the respective active impeller nozzles 27a or 27b back washes the respective sieve 18a, 18b of the sieve insert 18.

It is possible that the impeller 26 comprises less than the four impeller sections 26a, 26,b 26c, 26d or more than the four impeller sections 26a, 26b, 26c, 26d. The impeller sections 26a, 26b, 26c, 26d have a bend or curved shape. The impeller sections a26a, 26b, 26c, 26d re positioned side-by-side forming the impeller 26 having a generally circular cross section.

The reverse rinsing filter 10 according to the present application ensures a continuous supply of filtered liquid medium, e.g. of filtered potable water, namely in the filtration mode and in both reverse rinsing modes. The reverse rinsing filter 10 prevents the ingress of impurities, for example rust particles, strands of hemp and grains of sand.

Once the filter screen of the sieves 18a, 18b is loaded with particles, the backwash process starts manually or automatically by operating the reverse rinsing filter 10 first in the first reverse rinsing mode and subsequently in the second reverse rinsing mode.

The backwash process flushes particles off the filter screen of the sieves 18a, 18b. At the end of the backwash process the whole filter screen of the sieves 18a, 18b is clean and the same is again ready for working. During backwashing filtered liquid medium is still provided.

The sieve insert 18 is composed of the first sieve 18a and the second sieve 18b. These two sieves 18a, 18b define three chambers, namely the two inlet sub-chambers 12a and 12b of the inlet chamber 12 and one outlet chamber 13. The outlet chamber 13 is positioned in radial direction of the housing 11 between both inlet sub-chambers 12a, 12b.

In the filtration mode, both of inlet sub-chambers 12a, 12b are opened and both inlet valves 19a, 19b are opened, so liquid medium can pass through the whole filter screen provided by both sieves 18a, 18b.

The sieves 18a, 18b are backwashed separately.

By opening the first shut-off valve 20a (second reverse rinsing mode) the first inlet valve 19a is closed. The radial outer sieve 18a is then backwashed and the radial inner sieve 18b still provides filtered medium at the outlet opening 15. By closing the first shut-off valve 20a the first inlet valve 19a is again opened.

By opening the second shut-off valve 20b (first reverse rinsing mode) it is conversely. The radial inner sieve 18b is then backwashed and the radial outer sieve 18a still provides filtered medium at the outlet opening 15. By closing the second shut-off valve 20b the second inlet valve 19b is again opened.

The sieve insert 18 separates the filtered and unfiltered water.

The present application provides a weight reduction of reverse rinsing filters. The present application allows to minimize the height of reverse rinsing filters and provides a improved backwashing. The present application allows an improved filter screen utilization. The whole filter screen of reverse rinsing filter of the present application is fully backwashable. Spaces for filtered and unfiltered water are completely tight. No moving parts separate filtered and unfiltered water. The sieves of reverse rinsing filter of the present application are preferably designed as simple cylindrical shapes. Separately backwashed sieves reduce flow rate of backwashed water.

### List of reference signs

- 10: reverse rinsing filter
- 11: housing
- 11a: connection section
- 11 b: filter-bowl section
- 12: inlet chamber
- 12a: first inlet sub-chamber
- 12b: second inlet sub-chamber
- 12c: common inlet sub-chamber
- 13: outlet chamber
- 14: inlet opening
- 15: outlet opening
- 16: inlet flange
- 17: outlet flange
- 18: sieve insert
- 18a: first sieve
- 18b: second sieve
- 19a: first inlet valve
- 19b: second inlet valve
- 20a: first shut-off valve
- 20b: second shut-off valve
- 21 a: valve plunger
- 21 b: valve plunger
- 22a: valve seat
- 22b: valve seat
- 23a: valve stem
- 23b: valve stem
- 24a: plate like element
- 24b: plate like element
- 25a: spring element
- 25b: spring element
- 26: impeller
- 26a: impeller section
- 26b: impeller section
- 26c: impeller section
- 26d: impeller section
- 27a: impeller nozzle
- 27b: impeller nozzle
- 28: disc-like element
- 29: bottom part
- 30: opening
- 31: opening

## Claims

1. Reverse rinsing filter (10), having a housing (11), the housing (11) provides an inlet chamber (12) for liquid medium, especially for potable water, to be filtered and an outlet chamber (13) for filtered liquid medium, wherein the inlet chamber (12) and the outlet chamber (13) are separated by a sieve insert (18) in such a way that in a filtration mode of the reverse rinsing filter (10) liquid medium flows from the inlet chamber (12) through the sieve insert (18) into the outlet chamber (13) and that in a reverse rinsing mode of the reverse rinsing filter (10) liquid medium flows from the outlet chamber (13) through the sieve insert (18) into the inlet chamber (12), **characterized in that**
the inlet chamber (12) comprises a first inlet sub-chamber (12a) and a second inlet sub-chamber (12b),
the sieve insert (18) comprises a first sieve (18a) and a second sieve (18b), wherein the first sieve (18a) separates the first inlet sub-chamber (12a) from the outlet chamber (13) and the second sieve (18b) separates the second inlet sub-chamber (12b) from the outlet chamber (13) in such a way that in the filtration mode of the reverse rinsing filter (10) liquid medium flows from the first inlet chamber (12a) through the first sieve (18a) and from the second inlet chamber (12b) through the second sieve (18b) into the outlet chamber (13), that in a first reverse rinsing mode of the reverse rinsing filter (10) liquid medium flows from the first inlet chamber (12a) through the first sieve (18a) into the outlet chamber (13) and for backwashing of the second sieve (18b) from the outlet chamber (13) through the second sieve (18b) into the second inlet chamber (12b), and that in a second reverse rinsing mode of the reverse rinsing filter (10) liquid medium flows from the second inlet chamber (12b) through the second sieve (18b) into the outlet chamber (13) and for backwashing of the first sieve (18a) from the outlet chamber (13) through the first sieve (18a) into the first inlet chamber (12b).

2. Reverse rinsing filter as claimed in claim 1, **characterized in that** a first inlet valve (19a) is connected between an inlet opening (14) of the housing (11) and the first inlet sub-chamber (12a) and that a second inlet valve (19b) is connected between the inlet opening (14) of the housing (11) and the second inlet sub-chamber (12b), wherein in the filtration mode of the reverse rinsing filter (10) both inlet valves (19a, 19b) are opened, wherein in the first reverse rinsing mode of the reverse rinsing filter (10) the first inlet valve (19a) is opened and the second inlet valve (19b) is closed, and wherein in the second reverse rinsing mode of the reverse rinsing filter (10) the second inlet valve (19b) is opened and the first inlet valve (19a) is closed.

3. Reverse rinsing filter as claimed in claim 1 or 2, **characterized in that** a first shut-off valve (20a) is assigned to the first inlet sub-chamber (12a) and that a second shut-off valve (20b) is assigned to the second inlet sub-chamber (12b), wherein in the filtration mode of the reverse rinsing filter (10) both shut-off valves (20a, 20b) are closed, wherein in the first reverse rinsing mode of the reverse rinsing filter (10) the first shut-off (20a) is closed and the second shut-off valve (20b) is opened, and wherein in the second reverse rinsing mode of the reverse rinsing filter (10) the second shut-off valve (20b) is closed and the first shut-off valve (20a) is opened.

4. Reverse rinsing filter as claimed in claim 2 and 3, **characterized in that** during operation the first inlet valve (19a) is automatically opened when the first shut-off valve (20a) is closed, the first inlet valve (19a) is automatically closed when the first shut-off valve (20a) is opened, the second inlet valve (19b) is automatically opened when the second shut-off valve (20b) is closed, the second inlet valve (19b) is automatically closed when the second shut-off valve (20b) is opened.

5. Reverse rinsing filter as claimed in claim 3 or 4, **characterized in that** the first shut-off valve (20a) and the second shut-off valve (20b) are both provided by a three-way-valve.

6. Reverse rinsing filter as claimed in one of claims 3 to 5, **characterized in that** when the first shut-off valve (20a) is opened the first inlet sub-chamber (12a) is drainable to the ambient, and when the second shut-off valve (20b) is opened the second inlet sub-chamber (12b) is drainable to the ambient.

7. Reverse rinsing filter as claimed in one of claims 1 or 6, **characterized in that** the sieve insert (18) comprises further an impeller (26) being positioned within the outlet chamber (13) between the first sieve (18a) and the second sieve (18b), whereby the impeller (26) stands still in the filtration mode of the reverse rinsing filter (10), and wherein the impeller (26) rotates in first reverse rinsing mode and second reverse rinsing mode of the reverse rinsing filter (10).

8. Reverse rinsing filter as claimed in claim 7, **characterized in that** the impeller (26) comprises at least two impeller sections (26a, 26b, 26c, 26d) providing at least two impeller nozzles (27a, 27b), namely at least one first impeller nozzle (27a) being active in first reverse rinsing mode of the reverse rinsing filter (10) and at least one second impeller nozzle (27b) being active in the second reverse rinsing mode of the reverse rinsing filter (10).
